# FASCICULE DE BREVET EUROPEEN

(11) **EP 1 989 822 B1**
(45) Date de publication et mention de la délivrance du brevet: **29.11.2017**
(21) Numéro de dépôt: 07731513.3
(22) Date de dépôt: 24.01.2007
(51) Int. Cl.: H04L 12/18

(54) **SYSTEME DE FIABILISATION DE TRANSMISSION DE DONNEES MULTIDIFFUSEES**
ZUVERLÄSSIGKEITSSYSTEM FÜR MULTICAST-DATENÜBETRAGUNG
RELIABILITY SYSTEM FOR MULTICAST DATA TRANSMISSION

(30) Priorité: 25.01.2006 FR 0650257
(43) Date de publication de la demande: 12.11.2008
(73) Titulaire: Orange, 75015 Paris (FR)
(72) Inventeur: DUGOUJON, David, F-92130 Issy Les Moulineaux (FR); RABRET, Laurent, F-92170 Vanves (FR); BABONNEAU, Gérard, F-35235 Thorigne Fouillard (FR)
(86) Numéro de dépôt international: PCT/FR2007/050685
(87) Numéro de publication internationale: WO 2007/085763

(56) Documents cités:
- EP-A- 1 365 538
- WO-A-2005/078999
- US-A1- 2004 236 863
- CHAPWESKE J ET AL: "Tree Hash EXchange format (THEX)"[Online] 4 mars 2003 (2003-03-04), XP002283758 Extrait de l'Internet: URL:http://www.open-content.net/specs/draf t-jchapweske-thex-02.ht> [extrait le 2004-06-04]

## Description

La présente invention concerne un système de fiabilisation de transmission de données multidiffusées entre une source et une pluralité de récepteurs desdites données à travers un réseau de télécommunication.

L'invention trouve une application particulièrement avantageuse dans le domaine de la transmission de données selon le mode dit de multidiffusion, appelé également « multicast ».

Dans la suite de la description, on utilisera indifféremment les termes de multidiffusion et de multicast, ce dernier étant aujourd'hui largement répandu dans ce domaine.

La maîtrise de la distribution massive et efficace de données est un enjeu important pour les fournisseurs de services Internet (ISP pour « Internet Service Provider »). En effet, la tendance actuelle est de fournir et d'administrer à distance des équipements réseaux installés chez l'habitant par le biais de passerelles domestiques et de boîtiers décodeurs, autrement appelés « Set Top Box » (STB). Ces équipements installés chez l'habitant seront également désignés sous le terme de « récepteur » ou de « client ».

C'est donc potentiellement des millions de récepteurs qui peuvent être administrés depuis un ou quelques points contrôlés par l'ISP. D'autre part, il est de plus en plus évident que les virus continuent de sévir et atteignent désormais non seulement les ordinateurs individuels, mais aussi tout ce qui touche aux applications communicantes à base d'informatique mettant en oeuvre des équipements tels que les assistants personnels (PDA), les téléphones mobiles, ainsi que les passerelles domestiques et les STB déjà cités. Les concepteurs de virus ou autres logiciels espions sont de plus en plus habiles, et on constate une diminution des délais entre la publication de failles de sécurité et le développement de virus les exploitant.

Ainsi, il devient fondamental d'être capable de maîtriser des technologies permettant de mettre à jour très rapidement l'ensemble des récepteurs domestiques administrés par l'opérateur. De cette maîtrise dépend la fiabilité des équipements et la qualité des services, lesquelles doivent être obtenues par des solutions de mise à jour rapides et efficaces chez de très nombreux clients.

Une première méthode pour résoudre ce problème consiste à utiliser une ferme de serveurs de contenu, répartie ou non. Cependant cette solution peut être très coûteuse car elle nécessite des ressources considérables tant en nombre de serveurs qu'en ressources réseau. Aussi, pour atteindre un compromis acceptable, les administrateurs des serveurs utilisent bien souvent une politique d'étalement sur la durée en procédant à un maximum donné de mises à jour quotidiennes. Cette stratégie est intéressante pour limiter l'éventuel surcroît d'appels aux services d'assistance téléphonique (« hotlines ») car la mise à jour des logiciels conduit bien souvent à des appels supplémentaires, mais elle est totalement inadaptée lorsqu'il s'agit de déployer en urgence un module de sécurité par exemple.

Une deuxième méthode réside dans la multidiffusion, ou « multicast », qui constitue un moyen simple et efficace pour une source de données d'atteindre très rapidement un groupe quelconque de récepteurs, de quelques uns à plusieurs millions, mais cette solution basée sur le protocole UDP (« User Datagram Protocol ») n'offre aucune garantie concernant la transmission correcte des données aux clients, certaines d'entre elles pouvant être perdues au niveau de liens ou de routeurs par exemple. Cet inconvénient est aggravé par l'absence de voie de retour qui pourrait permettre la récupération des données manquantes. En effet, la gestion d'un tel système serait problématique pour des nombres très importants de récepteurs.

Cependant, le groupe RMT (« Reliable Multicast Transport ») à l'IETF s'est penché sur ce problème de fiabilisation de transmission multicast, et propose un ensemble de solutions pouvant se classer en deux grandes catégories:
- des solutions basées sur l'ajout d'informations de redondance (FEC pour « Forward Error Correction ») pour calculer les informations perdues ou manquantes quand elles sont en nombre limité. Un cas particulier de redondance est la diffusion cyclique sans FEC de la totalité des données destinées au groupe de clients.
- des solutions basées sur la maîtrise d'informations remontées par les clients en cas de pertes pour redemander les paquets perdus par au moins un usager, paquets qui sont alors transmis à destination de l'ensemble du groupe. Des mécanismes spéciaux sont alors nécessaires pour éviter une surcharge du réseau dans le sens des terminaux vers le serveur, qui pourrait s'apparenter à une attaque de type DDoS (déni de services distribué) avec le risque de bloquer un ensemble de services

Un usage conjoint de ces deux techniques permet d'optimiser les transferts sur le réseau, mais le problème apparenté aux attaques de type DDoS persiste si l'application a besoin de connaître la liste des récepteurs ayant reçu correctement le fichier.

En résumé, les méthodes de fiabilisation des transmissions de données selon le mode multicast présentent les limites suivantes.

S'agissant de la méthode par ferme de serveurs, on constate qu'en cas de gestion de très nombreux récepteurs par un site central, celui-ci ne peut accepter qu'un nombre limité de requêtes simultanées dépendant de ses ressources internes. Ces requêtes sont basées sur des sessions point à point établies notamment par le protocole TCP. Pour autoriser la gestion simultanée d'un grand nombre de récepteurs, la source de données est amenée à mettre en place un ensemble de machines pour répartir les requêtes. Ces solutions sont généralement onéreuses et complexes à gérer pour une bonne répartition de la charge.

S'agissant maintenant du multicast fiable, on constate que :
- si les solutions à base de FEC permettent d'atteindre à partir d'une seule source la totalité des récepteurs, ce moyen de distribution est très sensible aux pertes par rafales, que l'on trouve principalement sur les réseaux d'extrémité, et il ne peut donc assurer la fiabilité des données reçues dans tous les cas. En outre, tous les terminaux ne sont pas actifs simultanément, et il est parfois nécessaire de transmettre périodiquement les fichiers de données.
- les solutions à base de remontées d'acquittements ne peuvent gérer des groupes de très nombreux récepteurs qu'à la condition de limiter la quantité d'informations remontées vers la source. Ce point est caractérisé par le souci de limiter les phénomènes de "NAK implosion" où NAK signifie un acquittement négatif émis uniquement en cas de détection d'une perte de paquet de données. La plupart des solutions de ce type s'appuient sur une diffusion multicast non seulement pour les échanges de la source vers les récepteurs, mais aussi pour tous les messages émis par chacun des récepteurs qui doivent trouver leur place dans la même session que la source. C'est un mode de multicast appelé "N->N" pour le distinguer d'une session de multidiffusion de "1 ->N". La mise en situation de concurrence de la source avec ses récepteurs pour l'émission des données devient alors problématique pour plusieurs raisons :
   * l'émission des données en mode datagramme ne permet aucun contrôle du débit disponible, contrairement au protocole TCP où le contrôle reste par ailleurs très difficile, voire impossible, à réaliser sur une session destinée à un parc hétérogène de récepteurs. Les émissions en provenance de trop nombreux récepteurs risquent de saturer les liens du réseau, de se traduire par des pertes qui engendreront des émissions supplémentaires de la part des récepteurs, aggravant la situation de congestion.
   * de nombreux réseaux sont incompatibles avec un mode de fonctionnement N->N. De plus, de nombreux opérateurs limitent volontairement leur réseau au 1->N pour en conserver la maîtrise et éviter des congestions non contrôlées qui pourraient s'apparenter à des attaques de type DDoS.

Le document EP1365538 propose un transfert multicast utilisant, notamment, un réseau de pairs lors de la phase de récupération de données. Ainsi, un pairs n'ayant pas reçu toutes les données requerra auprès d'un autre pair quelconque les données manquantes avec le risque que le pair destinataire de la requête en récupération n'ait pas reçu les données ou que le transfert des données manquantes soit lourd en terme réseau en raison notamment de la distance réseau entre le pair requérant et le pair destinataire de la requête en récupération.

Le document US20040236863 décrit un système et une méthode utilisant une collaboration pair-à-pair pour améliorer la transmission par flux de contenu multimédia. En particulier, la récupération d'erreur est améliorée en permettant à un pair de retrouver des paquets perdus avec le pair qui lui est associé en couple. L'utilisation de couple de pairs pour la récupération des données manquantes réduit les chances de récupération de ses données. En outre, rien ne permet de s'assurer de l'intégrité des données récupérées.

Aussi, le problème technique à résoudre par l'objet de la présente invention est de proposer un système de fiabilisation de transmission de données multidiffusées, à travers un réseau (1) de télécommunication, entre une source et une pluralité de récepteurs desdites données connectés au réseau de télécommunication et apte à recevoir des données multidiffusées, qui permettrait de réaliser une transmission des données qui soit fiable, c'est-à-dire capable de remédier à d'éventuelles pertes tout en garantissant l'intégrité des données récupérées, économique en terme de coût réseau et de serveurs de distribution, performant, à savoir rapide dans le déploiement vers des millions de clients, et exempt de tout mécanisme de reprise en masse. Lesdits récepteurs clients constituent des pairs.
La solution au problème technique posé consiste, selon la présente invention, en ce que ledit système comprend un serveur de supervision connecté au réseau de télécommunication et apte à fournir à chaque récepteur client de la pluralité de récepteurs clients une liste d'au moins un pair, ledit récepteur client étant apte à obtenir des données manquantes des données multidiffusées d'un pair de la liste via une liaison de pairs fiable au travers du réseau de pairs, la source de données étant apte à transmettre auxdits récepteurs clients, préalablement aux données la racine (HR) d'un arbre de hachage de Merkle desdites données par multidiffusion fiable à travers ledit réseau de télécommunication, la source de données étant apte à transmettre aux récepteurs clients les hachés de niveau inférieur à ladite racine, postérieurement à ladite racine et préalablement aux données.

Ledit pair est constitué, notamment, par un autre récepteur client parmi les récepteurs clients ou une source de référence disposant des données.

La notion de liaison de pairs fait ici référence à la famille de protocoles basée sur des échanges dits "Peer to Peer" (P2P) apparue ces dernières années. On rappelle que l'originalité d'un réseau de pairs repose sur le fait que les terminaux impliqués se comportent à la fois comme des clients, en consommant des ressources, et des serveurs, en fournissant des ressources. A titre d'exemple, les protocoles P2P de partage de fichiers de données les plus performants utilisent des méthodes dites d'agglomération ou "swarming" : un fichier est découpé en plusieurs morceaux, ce qui permet son téléchargement à partir de plusieurs terminaux sources et optimise ainsi le partage de charge, la vitesse et la robustesse.

Ainsi, l'invention reprend le mécanisme de multidiffusion classique où une source multicast est chargée de diffuser des données, un fichier par exemple, à un groupe de récepteurs clients du réseau d'un opérateur par les protocoles ad hoc. Compte tenu de la non-fiabilité des couches de transport supportées par les paquets multicast, UDP notamment, il est possible que des données soient perdues dans le réseau. Pour résoudre ce problème, l'invention propose d'utiliser une approche de type "réseau de pairs". Chaque récepteur client est mis en relation avec certains de ses pairs au moyen d'une connexion fiable, telle que la connexion TCP/IP, maintenue tout au long de la session. Lorsqu'un récepteur détecte une perte de paquet de données, il contacte alors un pair pour récupérer le paquet en question.

En résumé, l'invention associe deux technologies afin d'optimiser les transmissions de données : le multicast permet des téléchargements vers un très grand nombre de clients, tandis que la liaison P2P permet d'éviter de remonter les messages d'erreur d'un grand nombre de clients vers une source unique.

L'invention utilise, notamment, une source de données multidiffusées vers une pluralité de récepteurs clients desdites données à travers un réseau de télécommunication, lesdits récepteurs clients constituant des pairs, ladite source de données diffusant vers des récepteurs clients apte à établir une liaison de pairs fiable avec un pair d'une liste d'au moins un pair fournie par un serveur de supervision en vue d'obtenir des données manquantes.

Selon un mode particulier de réalisation, ladite source de données est apte à transmettre auxdits récepteurs clients, préalablement aux données, la racine d'un arbre de hachage de Merkle desdites données par multidiffusion fiable à travers ledit réseau de télécommunication, ladite source de données étant apte à transmettre auxdits récepteurs clients les hachés de niveau inférieur à ladite racine, postérieurement à ladite racine et préalablement auxdites données, un récepteur client étant apte à recevoir d'un autre récepteur client des données manquantes, à travers une liaison de pairs fiable.

Un objet de l'invention concerne également un serveur de supervision, à travers un réseau (1) de télécommunication, pour un système de fiabilisation de transmission de données multidiffusées entre une source de données et une pluralité de récepteurs clients desdites données connectés au réseau de télécommunication et apte à recevoir les données multidiffusées à travers le réseau de télécommunication, lesdits récepteurs clients constituant des pairs d'un réseau de pairs, ledit serveur de supervision étant connecté au réseau de télécommunication et apte à fournir à chaque récepteur client de la pluralité de récepteurs clients une liste d'au moins un pair, ladite liste étant destinée à établir une liaison de pairs fiable au travers du réseau de pairs entre ledit récepteur client et ledit pair en vue d'obtenir des données manquantes, la source de données étant apte à transmettre auxdits récepteurs clients, préalablement aux données la racine (HR) d'un arbre de hachage de Merkle desdites données par multidiffusion fiable à travers ledit réseau de télécommunication, la source de données étant apte à transmettre aux récepteurs clients les hachés de niveau inférieur à ladite racine, postérieurement à ladite racine et préalablement aux données.

L'invention utilise, notamment, un pair pour un système de fiabilisation de transmission de données multidiffusées entre une source et une pluralité de récepteurs clients desdites données à travers un réseau (1) de télécommunication, lesdits récepteurs clients constituant des pairs, ledit pair figurant dans une liste fournie par un serveur de supervision (3) à un récepteur client, ledit récepteur client (20₁, 20₂,..., 210_{N}) étant apte à établir une liaison de pairs fiable avec ledit pair en vue d'obtenir des données manquantes.

Selon des modes de réalisation, le quatrième objet de l'invention présente les caractéristiques supplémentaires énoncées ci-après :
Ledit pair est constitué par une source de référence disposant desdites données et étant apte à établir une liaison de pairs fiable avec au moins un récepteur client.
Ainsi, au cas où des paquets de données seraient perdus pour tous les récepteurs, ceux desdits récepteurs ayant la source de référence dans la liste fournie par le serveur de supervision peuvent alors établir une liaison pair à pair avec ladite source de référence et récupérer lesdits paquets perdus, cette récupération se propageant aux autres récepteurs selon le mécanisme nominal de liaison de pairs entre récepteurs.

Ledit pair est constitué par un autre récepteur client parmi lesdits récepteurs clients.

Un objet de l'invention concerne également un récepteur client dans un système de fiabilisation de transmission de données multidiffusées, à travers un réseau (1) de télécommunication, entre une source et une pluralité de récepteurs clients desdites données connecté au réseau de télécommunication et apte à recevoir les données multidiffusées à travers le réseau de télécommunication, lesdits récepteurs clients constituant des pairs d'un réseau de pairs, ledit récepteur client (20₁, 20₂,..., 210_{N}) étant apte à obtenir des données manquantes des données multidiffusées d'un autre récepteur client parmi la pluralité de récepteurs clients via une liaison de pairs fiable au travers du réseau de pairs, ledit autre récepteur client étant sélectionné dans une liste d'au moins un autre récepteur client parmi la pluralité de récepteurs clients fournie par un serveur de supervision, la source de données étant apte à transmettre auxdits récepteurs clients, préalablement aux données la racine (HR) d'un arbre de hachage de Merkle desdites données par multidiffusion fiable à travers ledit réseau de télécommunication, la source de données étant apte à transmettre aux récepteurs clients les hachés de niveau inférieur à ladite racine, postérieurement à ladite racine et préalablement aux données.

Selon des modes de réalisation préférentiels non limitatifs, le cinquième objet de l'invention présente les caractéristiques supplémentaires prises isolément ou en combinaison, énoncées ci-après :
Ledit récepteur client comprend des moyens de vérification d'intégrité des données fournies par ledit autre récepteur client lors d'une liaison de pairs. Ainsi lorsqu'un récepteur récupère des données auprès d'un autre récepteur de sa liste, il s'assure que les données reçues correspondent bien aux données attendues.

Les moyens de vérification comprennent des moyens de calcul de hachés de fragments de données reçus d'au moins un autre récepteur client et des moyens de comparaison des hachés calculés avec des hachés desdits fragments reçus de ladite source de données.

Le récepteur client comprend des moyens de vérification d'intégrité de hachés fournis par ledit autre récepteur client lors d'une liaison de pairs.

En effet, les hachés reçus de la source sont en général transmis selon une liaison multicast non fiabilisée, de sorte qu'ils peuvent être perdus puis récupérés par un récepteur auprès des pairs de sa liste au même titre que les autres données. Les moyens de vérification d'intégrité de hachés permettent donc de vérifier les informations fournies par l'autre récepteur client.
Un objet de l'invention concerne également un procédé d'émission de données multidiffusées, à travers un réseau (1) de télécommunication, entre une source et une pluralité de récepteurs clients connectés au réseau de télécommunication et apte à recevoir les données multidiffusées à travers le réseau de télécommunication, lesdits récepteurs clients constituant des pairs d'un réseau de pairs, ledit procédé comprenant l'émission de données manquantes des données multidiffusées par un pair d'une liste d'au moins un pair vers un récepteur client à travers une liaison de pairs fiableau travers du réseau de pairs, la liste étant fournie par un serveur de supervision au récepteur client, la source de données étant apte à transmettre auxdits récepteurs clients, préalablement aux données la racine (HR) d'un arbre de hachage de Merkle desdites données par multidiffusion fiable à travers ledit réseau de télécommunication, la source de données étant apte à transmettre aux récepteurs clients les hachés de niveau inférieur à ladite racine, postérieurement à ladite racine et préalablement aux données.

Un objet de l'invention concerne également un procédé de réception de données multidiffusées, à travers un réseau (1) de télécommunication, entre une source et une pluralité de récepteurs clients connectés au réseau de télécommunication et apte à recevoir les données multidiffusées à travers le réseau de télécommunication, lesdits récepteurs clients constituant des pairs d'un réseau de pairs, ledit procédé comprenant la réception de données manquantes des données multidiffusées par un récepteur client d'un pair d'une liste d'au moins un pair à travers une liaison de pairs fiable d'un réseau de pairs, la liste étant fournie par un serveur de supervision audit récepteur client, la source de données étant apte à transmettre auxdits récepteurs clients, préalablement aux données la racine (HR) d'un arbre de hachage de Merkle desdites données par multidiffusion fiable à travers ledit réseau de télécommunication, la source de données étant apte à transmettre aux récepteurs clients les hachés de niveau inférieur à ladite racine, postérieurement à ladite racine et préalablement aux données.

Un objet de l'invention concerne également un programme d'ordinateur sur un support de données et chargeable dans la mémoire interne d'un ordinateur, ledit programme comprenant des portions de code pour l'exécution des étapes du procédé selon le sixième objet.

Un objet de l'invention concerne également un programme d'ordinateur sur un support de données et chargeable dans la mémoire interne d'un ordinateur, ledit programme comprenant des portions de code pour l'exécution des étapes du procédé selon le septième objet.

La description qui va suivre en regard des dessins annexés, donnés à titre d'exemples non limitatifs, fera bien comprendre en quoi consiste l'invention et comment elle peut être réalisée.
La figure 1 est un schéma d'un système de fiabilisation de transmission de données multicast conforme à l'invention.
La figure 2 représente un arbre de hachage de Merkle utilisé dans l'invention.
La figure 3 représente un format de paquets pour la transmission de données de la source multicast vers les récepteurs.
La figure 4 donne un exemple de paquets de hachés transmis par la source multicast vers les récepteurs.
La figure 5 donne un exemple de paquets de données transmis par la source multicast vers les récepteurs.

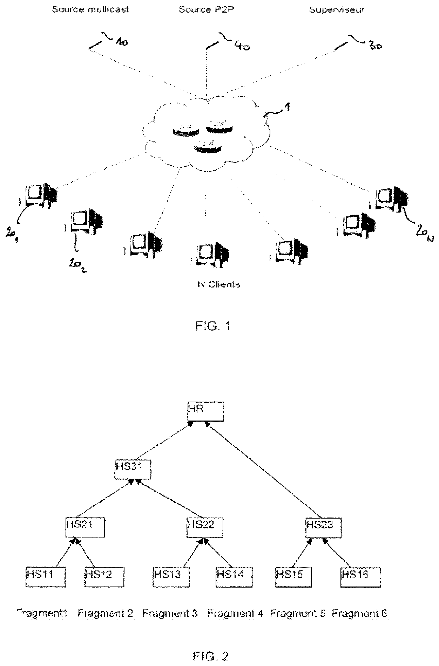

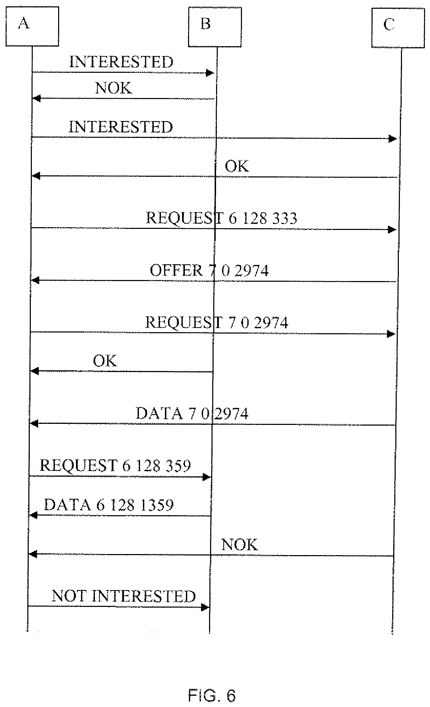

La figure 6 est un schéma de session de récupération de données entre un récepteur et deux de ses pairs. Sur la figure 1 est représenté un système de fiabilisation de transmission de données multidiffusées entre une source multicast 10 et une pluralité de N récepteurs clients 20₁, 20₂, 20_{N} à travers un réseau 1 de télécommunication. La transmission des données est effectuée dans le réseau 1 en utilisant par exemple le protocole UDP, a priori non fiable, mais qui peut éventuellement l'être rendu au moyen des méthodes citées plus haut. Cependant, l'invention souhaite éviter le recours systématique à ces méthodes compte tenu de leurs inconvénients lorsqu'il s'agit de transmettre en multicast un grand nombre de données à un grand nombre de récepteurs.

Le système de la figure 1 comprend un serveur 30 de supervision chargé en particulier de mettre en relation les différents récepteurs clients en vue d'établir ultérieurement entre eux une liaison de pairs fiable. Pour cela, le serveur 30 de supervision fournit lors de l'enregistrement d'un client une liste d'au maximum N-1 autres pairs déjà enregistrés avec lesquels seront établies des connexions TCP/IP fiables lors des sessions de récupération de données manquantes.

Ledit serveur 30 de supervision et la source multicast 10 peuvent ne constituer qu'une seule machine.

Bien entendu, les premiers clients n'obtiendront pas N-1 pairs, ce qui n'est pas un problème puisqu'ils seront contactés par de nouveaux clients à mesure que leur nombre augmentera.

Il est important de noter que le serveur 30 de supervision doit choisir avec soins les pairs associés à un récepteur donné. En effet, ne choisir que des pairs proches au sens topologique du terme rendrait la récupération d'erreurs impossible en cas de problème imputable au coeur du réseau, par re-routage par exemple. A l'inverse, ne choisir que des pairs éloignés pourrait alourdir inutilement le trafic réseau et nuire à l'efficacité du système. En outre, un choix aléatoire des pairs parmi l'ensemble des pairs en jeu semble intéressant du point de vue de la robustesse mais moyennement efficace en terme d'optimisation du trafic. A des fins d'optimisation, il paraît donc préférable que le serveur 30 fournisse une liste de pairs proches et éloignés.

Comme le montre la figure 1, le système conforme à l'invention comprend également une source 40 de référence qui dispose de la totalité des données à transmettre et qui figure dans au moins une liste de pairs fournie par le serveur 30, de manière à pouvoir retransmettre éventuellement des données manquantes aux pairs associés qui en feraient la demande. En fait, la source 40 de référence est un client qui dispose déjà du fichier dans son intégralité et ne participe donc pas à la session multicast. En revanche, elle participe à la fiabilisation du déploiement en fournissant des paquets manquants aux clients avec lesquels il est connecté. Ceci peut être fortement utile lors d'une perte de paquet en amont, près de la source 10.

Egalement, la source 40 de référence peut être localisée sur une même machine avec la source 10 et le serveur 30 de supervision.

Avant de poursuivre la description du système de fiabilisation conforme à l'invention, il convient de rappeler la structure d'un fichier de données.

Un fichier est constitué de un ou plusieurs « blocs » de données selon les besoins de l'application. Les blocs sont gérés par l'application elle-même et non par le protocole.

Un bloc est constitué de plusieurs fragments. C'est par rapport à ces fragments que s'effectue la vérification de l'intégrité du contenu échangé entre les pairs.

Un fragment est constitué de plusieurs segments. Ces segments sont encapsulés dans des paquets UDP par exemple.

Lors d'une session de déploiement, le fichier à transférer est envoyé par la source 10 sous la forme de segments à l'intérieur de paquets UDP. En cas de perte, la récupération du ou des segments manquants se fait en mode P2P. Il est alors nécessaire de prévoir un mécanisme qui puisse garantir l'intégrité des données téléchargées depuis un client tiers, lequel n'est pas nécessairement digne de confiance, et ceci dans un délai relativement court.

Il existe plusieurs méthodes pour résoudre ce problème. Chacune consiste à envoyer au préalable et de façon sûre une signature qui permet aux clients de certifier les données reçues.

Une solution simple consiste à fournir un haché du fichier. Cette méthode a ses limites car elle oblige le récepteur à ne vérifier l'intégrité du fichier qu'une fois ce dernier complètement téléchargé. De plus, si le récepteur a été obligé de récupérer des segments de données chez plusieurs pairs et que l'un d'eux était malveillant, le récepteur se trouve dans l'incapacité d'identifier le pair malveillant et les segments de données incriminés.

Une autre solution consiste à calculer des hachés sur des fragments du fichier. De la sorte, dès qu'un client rassemble un fragment à partir de plusieurs segments, il peut en vérifier l'intégrité et ainsi réagir plus promptement à une attaque malveillante. Il s'agit de la méthode utilisée actuellement dans le protocole P2P connu sous le nom de BitTorrent (http://www.bittorrent.com). Le point faible de cette approche réside dans le fait que l'ensemble des hachés des fragments d'un fichier doit être fourni de manière sure par la source 10. Ces données peuvent devenir assez conséquentes suivant la taille de fragments choisie (jusqu'à quelques mégaoctets) et leur transport peut être pénalisant lorsque l'on s'adresse à des millions de clients.

La solution privilégiée par l'invention consiste à utiliser un arbre de hachage de Merkle (R. Merkle, « Secrecy, Authentication and Public Key Systems » PhD. Dissertation, Dept of Electrical Engineering, Stanford Univ., 1979). Cette solution, illustrée sur la figure 2, consiste à calculer des hachés, dits de niveau 1 : HS11, HS12, ..., HS16 sur les six fragments du fichier, et de calculer récursivement des hachés, dits de niveau 2 : HS21, HS22, HS23 sur les hachés précédents HS11, ... pris deux à deux jusqu'à l'obtention d'un haché racine HR. Cette solution induit une surcharge de calcul par rapport à la solution précédente, mais elle permet à la source 10 de n'avoir à transmettre que le haché racine HR de façon fiable. La taille des données à envoyer à l'avance par rapport au déploiement et en toute fiabilité est alors considérablement réduite, de l'ordre d'une centaine d'octets tout compris par exemple.

Cette information concernant la racine HR de l'arbre de Merkle du fichier de données à transmettre fait partie d'un ensemble d'informations que la source multicast 10 doit rassembler dans un méta-fichier afin de les distribuer de manière fiable, intègre et sécurisée à tous les récepteurs 20₁,..., 20_{N} devant participer à la session de transmission de données. La manière dont est fourni ce méta-fichier aux clients ne fait pas partie de l'invention. Elle peut être réalisée sans aucune difficulté par émissions périodiques ou par l'utilisation de protocoles HTTP, HTTPS, FTP, SCP par exemple.

Outre la racine HR de l'arbre de Merkle, ledit méta-fichier peut comprendre également :
- l'adresse IP de la source,
- l'adresse IP du flux multicast,
- la date et l'heure GMT des transmissions programmés,
- le nom du fichier de données,
- la taille du fichier,
- la taille en octets des fragments de données utilisés pour générer l'arbre de hachage de Merkle,
- optionnellement, une liste contenant l'ensemble des informations sur les blocs :
   * le numéro de bloc,
   * la taille de bloc,
   * l'offset du début de bloc dans le fichier,
- optionnellement, une stratégie choisie pour le dialogue avec les pairs.

On obtient ainsi un méta-fichier de quelques centaines d'octets à distribuer avant le déploiement des données. Notons qu'il est possible d'y associer un certificat afin de garantir son authenticité.

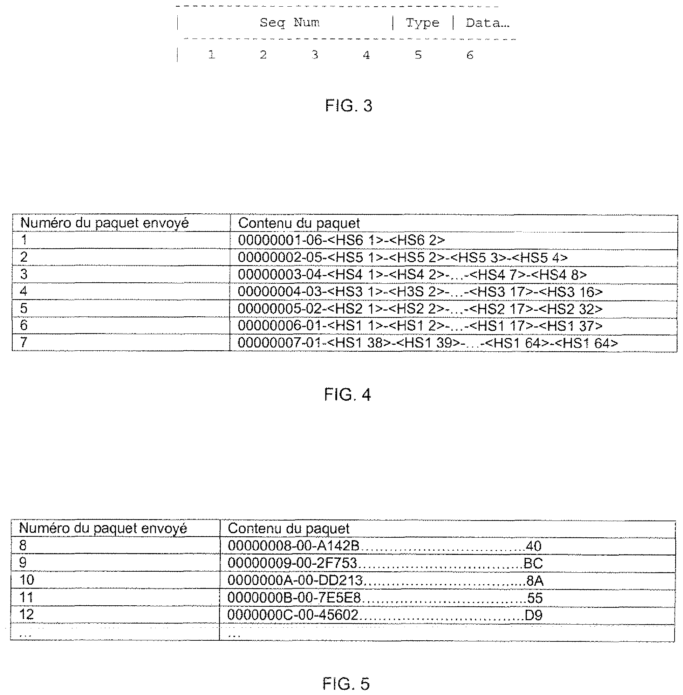

Le méta-fichier ainsi que toutes les autres données ou informations émise par la source multicast 10 à destination des récepteurs sont envoyées dans des paquets dont le format est représenté sur la figure 3.

Les quatre premiers octets, notés « « Seq Num », sont réservés au numéro de séquence du paquet. C'est sur l'analyse de ces numéros de séquence reçus qu'un récepteur est capable de détecter la perte d'un ou plusieurs paquets. Le numéro de séquence ne dépend que de l'ordre d'émission des paquets de données. Il est incrémenté à chaque émission d'un paquet multicast.

L'octet suivant, noté « Type » caractérise le type de l'information envoyée dans le paquet :
- la valeur 00 correspond à un paquet de données proprement dites,
- la valeur 01 correspond à un paquet contenant des hachés de niveau 1,
- la valeur 02 correspond à un paquet contenant des hachés de niveau 2, et ainsi de suite

Les octets qui suivent le champ « Type » correspondent aux données utiles, que ce soit des hachés ou des données du fichier à transmettre, comme représenté respectivement sur les figures 4 et 5.

Après avoir transmis de façon fiable aux récepteurs la racine HR de l'arbre de Merkle du fichier de données, et avant déploiement proprement dit, la source multicast 10 envoie à l'ensemble des clients tous les hachés nécessaires à la vérification de l'intégrité des données qui pourraient être ultérieurement récupérées en cas de pertes. Rappelons que les segments, ou paquets de données, envoyés par la source sont jugés intègres par les clients.

Un exemple de paquets correspondants à cet envoi est donné sur la figure 4. Dans un premier temps, la source 10 envoie les hachés de niveau immédiatement inférieur au niveau de la racine HR. Dans l'exemple représenté, la racine est de niveau 7, aussi le premier paquet envoyé est de type 06 et contient les hachés de niveau 6, à savoir HS61 et HS62. Le deuxième paquet contient les hachés de niveau 5, et ainsi de suite jusqu'aux hachés de niveau 1 qui sont les hachés de tous les fragments de fichier, comme montré sur la figure 2.

De cette façon, si un paquet de hachés est perdu, il peut être récupéré chez un pair et son intégrité est vérifiée à partir des hachés du niveau supérieur. Ceci est valable même en cas de perte du premier paquet puisque, dans ce cas, la vérification est faite par le haché racine HR de l'arbre de Merkle qui fait parti des informations contenues dans le méta-fichier précédemment envoyé de façon fiable et intègre. C'est également vrai pour la perte du premier paquet de données de type 00 puisque le décalage peut être calculé a posteriori.

Il faut remarquer que les paquets sont constitués de manière à n'envoyer au plus qu'un seul niveau par paquet et de n'envoyer que des hachés entiers par paquets. Ceci est possible puisque les paquets émis en multicast sont dits « packet boundary », c'est à dire que le logiciel client peut contrôler la taille de chaque paquet transmis sur le réseau. Il est ainsi possible de transmettre des paquets de hachés de taille variable.

Puis, les paquets de type 00 contenant les données sont émis par la source multicast 10 selon le format représenté sur la figure 5. Le premier paquet de ce type permet de calculer le décalage entre le numéro de séquence (Seq Num) et la position des données utiles. A cette fin, tous les paquets de données du fichier à déployer, à l'exception du dernier, doivent avoir la même taille. Cette information rend possible la reconstitution du fichier en cas de perte.

Le numéro de séquence des paquets permet donc à un récepteur de détecter les pertes de données envoyées par la source et de mener une opération de réparation auprès de ses pairs. La détection des pertes doit pouvoir être effectuée pendant un transfert ou quand celui-ci s'interrompt, quelle qu'en soit la cause. Plusieurs cas sont possibles parmi lesquels il faut distinguer les arrêts de transfert par la source et les pertes sur le réseau de transmission :
1. A la fin de la transmission d'un fichier, un message END est émis par la source. Il contient un champ indiquant le numéro de séquence du dernier segment émis. Ce message est envoyé plusieurs fois pour garantir la fiabilité de sa réception en cas de pertes sur le réseau. A la réception de ce message, un récepteur peut facilement identifier si des paquets ont été perdus et alors engager une procédure de réparation.
2. En cas d'arrêt momentané de la transmission par la source, celle-ci doit envoyer un message PAUSE contenant le numéro de séquence du dernier paquet émis. Le récepteur peut engager une procédure de réparation similaire au cas précédent.
3. En cas d'arrêt prolongé de réception des données sans message END ou PAUSE, le déclenchement d'une temporisation permet de conclure à la rupture de la transmission. Le récepteur peut alors tenter de lancer une procédure de réparation s'il peut joindre ses pairs, ceci en fonction de la localisation de la coupure réseau.
4. La détection de fin de transmission est aussi possible par analyse de la taille du fichier reçu. En effet, la taille du fichier à transmettre est un paramètre du méta-fichier d'informations fourni en premier lieu par la source multicast.

Le mécanisme de dialogue entre pairs lors de la récupération de données manquantes par un récepteur va maintenant être décrit en détail.

Dans tous les cas, la demande de connexion à un pair se fait en fournissant le haché racine HR de Merkle qui identifie de manière certaine le fichier de données objet du déploiement. Il est toutefois possible d'envisager d'autres moyens d'identification comme le nom ou un identifiant du fichier. Fournir cet identifiant permet aux récepteurs de distinguer et identifier les sessions.

Sachant que le milieu des pairs considérés n'est pas nécessairement coopératif, il peut être préférable de mettre en oeuvre une politique de contact entre pairs du type « tit-for-tat » ou « un prêté pour un rendu ».

Dans ce contexte, chaque pair client doit limiter son nombre de télétransmissions simultanées vers d'autres pairs et privilégier ceux d'entre eux qui sont les plus généreux avec lui. Les critères de sélection sont les suivants :
- En priorité, privilégier les pairs qui sont en cours de télétransmission de données avec les meilleurs débits.
- Sinon, privilégier les pairs qui ont fourni le plus de données.
- Si aucun des deux cas précédents n'est applicable, choisir le(s) pair(s) au hasard ou en fonction des informations topologiques, comme discuté ci-dessus.

Cependant, en mode multicast, un récepteur n'a jamais testé les échanges avec ses pairs au moment où il décide d'initialiser une procédure de réparation. Il ne sait pas a priori quels sont les meilleurs pairs.

Quand un récepteur a détecté une perte de données, il doit décider du démarrage du processus de réparation. Un point important dans le fonctionnement est d'optimiser les requêtes vers les pairs. Or, la particularité d'une transmission multicast est que dans certains cas tous les clients détectent une fin de fragment ou de bloc au même moment et sont donc amenés à déclencher la procédure de récupération quasi simultanément lorsqu'ils détectent une perte de données. En conséquence, la spécification des échanges doit éviter une profusion de messages déclenchés par ces évènements afin de limiter les risques de congestion du réseau par des rafales de trafic. Plusieurs cas sont possibles :
1. Le récepteur attend la fin d'un bloc, d'un fragment ou du fichier, signalée par un message PAUSE par exemple, pour initialiser une procédure de réparation vers ses pairs. Les requêtes peuvent contenir une liste de segments ou de plages de segments perdus. Chaque récepteur déclenche une temporisation pseudo-aléatoire dans une fenêtre prédéfinie qui peut être un champ supplémentaire dans le méta-fichier. Ainsi, les requêtes sont réparties sur un temps limité pour lisser la charge du réseau. Dès réception des données complémentaires, chaque récepteur vérifie l'intégrité du fragment au moyen des informations de hachés.
2. Le récepteur initialise une procédure de réparation dès qu'il a détecté la perte d'un paquet isolé ou d'une plage de paquet, sans attendre un message PAUSE. Il déclenche une temporisation comme ci-dessus avant d'envoyer un message de requête (REQUEST) défini plus loin.

Le choix de l'une ou l'autre des solutions est fonction de l'application, du taux et de la répartition des erreurs.

Le tableau 1 ci-dessous décrit l'ensemble des instructions de signalisation entre pairs utilisées lors du protocole de récupération de données manquantes.

**Tableau 1**

| Message | Paramètres | Description |
|---|---|---|
| INTERESTED | Aucun | Notifie un pair d'une demande de téléchargement de données. |
| NOT INTERESTED | Aucun | Notifie un pair de la fin d'une demande de téléchargement de données |
| REQUEST | Numéro(s) de séquence du premier segment perdu. Taille (en octets. Peut dépasser la taille du segment). | Envoyé par le client. Demande le téléchargement de données qui peuvent s'étaler sur plusieurs segments |
| OFFER | Numéro(s) de séquence du premier segment perdu Taille. | Réponse envoyée par un pair lorsque celui-ci ne dispose que d'une partie des données demandées par le client. Le client doit réémettre un message REQUEST adéquat. |
| DATA | Numéro de séquence du segment. Taille Données. | Réponse envoyée par le pair avec les données requises par le client |
| CANCEL | Numéro de séquence du segment. Taille. | Annule un message REQUEST |
| OK | Aucun | Suite à un message INTERESTED, notifie que le pair accepte que le client soumette des messages REQUEST (peut annuler un message NOK) |
| NOK | Aucun | Suite à un message INTERESTED, notifie que le pair refuse les messages REQUEST du client |

La figure 6 décrit un exemple de session d'échanges entre des pairs A, B, C utilisant les messages de signalisation du tableau 1.

Il existe deux stratégies dans la façon d'organiser le téléchargement entre pairs :
- La première approche consiste à interroger ses propres pairs à l'aveugle. Cette méthode qui économise le nombre de messages envoyés est optimale dans un réseau à faible taux de perte et lorsqu'il n'est pas nécessaire que les paquets manquants arrivent rapidement. Chaque client n'a aucune idée des paquets reçus par ses congénères et interroge donc séquentiellement ses pairs jusqu'à obtenir les données qu'il désire.
- La deuxième approche consiste à notifier aux pairs les différents fragments dont le client dispose dès la réception d'un fragment. Pour cela, il est nécessaire d'introduire deux nouveaux messages définis dans le tableau 2 ci-dessous.

**Tableau 2**

| Message | Paramètres | Description |
|---|---|---|
| HAVE | Champs de bits ou 0 si aucune données | 0 correspond à un fragment manquant, 1 correspond à un fragment présent |
| RECEIVED | Numéro du fragment | Notifie un pair de la réception d'un fragment |

Lorsqu'un fragment est complété, le client doit vérifier son intégrité à partir de l'arbre de hachage de Merkle si une partie des données ne provient pas de la source multicast. Il pourra alors ensuite fournir ces données à ses pairs.

Une transmission multicast (UDP/IP) est très sensible aux congestions dans le réseau, car il n'y a aucun moyen simple de réguler le débit, en général constant, émis par la source. Il est donc important que les retransmissions, en n'importe quel point du réseau, ne soient jamais un obstacle au transfert des paquets de multicast. Ce comportement est naturel dans un réseau IP, car le trafic TCP laisse la place à UDP. Si le débit UDP est très proche du débit maximal autorisé sur un lien, le seul risque est la lenteur des opérations de réparation.

Si les retransmissions s'avéraient une cause de congestion, il faudrait alors attendre la fin de la transmission pour initialiser le processus de réparation. Les moyens décrits ci-dessus restent inchangés.

L'invention prévoit également que la racine de l'arbre de hachage de Merkle est transmis aux récepteurs, préalablement aux données.

Cette racine peut être transmise par tout moyen, de préférence fiable. En particulier, la source de données est apte à transmettre aux récepteurs, préalablement aux données, la racine dudit arbre de hachage de Merkle par multidiffusion fiable à travers ledit réseau de télécommunication. Bien entendu, d'autres moyens de transmission peuvent être envisagés comme une page web ou un courrier électrique.

De même, selon l'invention, ladite source de données est apte à transmettre aux récepteurs les hachés de niveau inférieur à ladite racine, postérieurement à ladite racine et préalablement aux données.

L'invention concerne également une source de données multidiffusées vers une pluralité de récepteurs desdites données à travers un réseau de télécommunication, remarquable en ce que la source de données est apte à transmettre aux récepteurs, préalablement aux données, la racine d'un arbre de hachage de Merkle des données par multidiffusion fiable à travers ledit réseau de télécommunication.

De plus, ladite source de données est apte à transmettre aux récepteurs les hachés de niveau inférieur à ladite racine, postérieurement à ladite racine et préalablement auxdites données.

L'invention concerne par ailleurs un serveur de supervision pour un système de fiabilisation de transmission de données multidiffusées entre une source et une pluralité de récepteurs desdites données à travers un réseau de télécommunication, remarquable en ce que ledit serveur de supervision est apte à fournir à chaque récepteur une liste d'au moins un autre récepteur, ladite liste étant destinée à établir une liaison de pairs fiable entre ledit récepteur et ledit autre récepteur. La liste comprend également une source de référence disposant des données.

L'invention concerne en outre une source de référence pour un système de fiabilisation de transmission de données multidiffusées entre une source et une pluralité de récepteurs desdites données à travers un réseau de télécommunication, remarquable en ce que ladite source de référence dispose desdites données et est apte à établir une liaison de pairs fiable avec au moins un récepteur.

L'invention concerne un récepteur dans un système de fiabilisation de transmission de données multidiffusées entre une source et une pluralité de récepteurs desdites données à travers un réseau de télécommunication, remarquable en ce que ledit récepteur comprend des moyens de vérification d'intégrité des données fournies par ledit autre récepteur lors d'une liaison de pairs.

Enfin, l'invention concerne un système de fiabilisation de transmission de données multidiffusées entre une source et une pluralité de récepteurs (20₁, 20₂,..., 20_{N}) desdites données à travers un réseau de télécommunication, ledit système comprenant un serveur de supervision apte à fournir à chaque récepteur une liste d'au moins un autre récepteur, ledit récepteur étant apte à recevoir dudit autre récepteur des données manquantes, à travers une liaison de pairs fiable.

Le système comprend également une source de référence disposant desdites données et figurant dans au moins une liste fournie par ledit serveur de supervision.

Dans le système, chaque récepteur comprend des moyens de vérification d'intégrité des données fournies par ledit autre récepteur lors d'une liaison de pairs.

Dans le système, lesdits moyens de vérification comprennent des moyens de calcul de hachés de fragments de données reçus d'au moins un autre récepteur et des moyens de comparaison des hachés calculés avec des hachés desdits fragments reçus de ladite source de données.

Dans le système, chaque récepteur comprend des moyens de vérification d'intégrité de hachés fournis par ledit autre récepteur lors d'une liaison de pairs.

Dans le système, lesdits moyens de vérification d'intégrité de hachés utilisent un arbre de hachage de Merkle.

Dans le système, la racine de l'arbre de hachage de Merkle est transmis auxdits récepteurs, préalablement auxdites données.

Dans le système, la source de données est apte à transmettre auxdits récepteurs, préalablement auxdites données, la racine dudit arbre de hachage de Merkle par multidiffusion fiable à travers ledit réseau de télécommunication.

Dans le système, la source de données est apte à transmettre auxdits récepteurs les hachés de niveau inférieur à ladite racine, postérieurement à ladite racine et préalablement auxdites données.

Dans le système, la liaison de pairs fiable est établie au moyen d'une connexion TCP.

## Revendications

1. Système de fiabilisation de transmission de données multidiffusées, à travers un réseau (1) de télécommunication, entre :
- une source (10) de données et
- une pluralité de récepteurs clients (20₁, 20₂,..., 20_{N}) connectés au réseau de télécommunication et apte à recevoir les données multidiffusées à travers le réseau (1) de télécommunication, lesdits récepteurs clients constituant des pairs d'un réseau de pairs, **caractérisé en ce que** ledit système comprend
- un serveur (30) de supervision connecté au réseau de télécommunication et apte à fournir à chaque récepteur client de la pluralité de récepteurs clients une liste d'au moins un pair, ledit récepteur client étant apte à obtenir des données manquantes des données multidiffusées d'un pair de la liste via une liaison de pairs fiable au travers du réseau de pairs;
la source de données étant apte à transmettre auxdits récepteurs clients, préalablement aux données la racine (HR) d'un arbre de hachage de Merkle desdites données par multidiffusion fiable à travers ledit réseau de télécommunication, la source de données étant apte à transmettre aux récepteurs clients les hachés de niveau inférieur à ladite racine, postérieurement à ladite racine et préalablement aux données.

2. Serveur de supervision pour un système de fiabilisation de transmission de données multidiffusées, à travers un réseau (1) de télécommunication, entre une source (10) de données et une pluralité de récepteurs clients (20₁, 20₂,..., 20_{N}) connectés au réseau de télécommunication et apte à recevoir les données multidiffusées à travers le réseau (1) de télécommunication, lesdits récepteurs clients constituant des pairs d'un réseau de pairs, **caractérisé en ce que** ledit serveur (30) de supervision est connecté au réseau de télécommunication et apte à fournir à chaque récepteur client de la pluralité de récepteurs clients une liste d'au moins un pair, ladite liste étant destinée à établir une liaison de pairs fiable au travers du réseau de pairs entre ledit récepteur client et ledit pair en vue d'obtenir des données manquantes,
la source de données étant apte à transmettre auxdits récepteurs clients, préalablement aux données la racine (HR) d'un arbre de hachage de Merkle desdites données par multidiffusion fiable à travers ledit réseau de télécommunication, la source de données étant apte à transmettre aux récepteurs clients les hachés de niveau inférieur à ladite racine, postérieurement à ladite racine et préalablement aux données.

3. Récepteur client dans un système de fiabilisation de transmission de données multidiffusées, à travers un réseau (1) de télécommunication, entre une source (10) et une pluralité de récepteurs clients (20₁, 20₂,..., 20_{N}) connectés au réseau de télécommunication et apte à recevoir les données multidiffusées à travers le réseau de télécommunication, **caractérisé en ce que** ledit récepteur client (20₁, 20₂,..., 210_{N}) est apte à obtenir des données manquantes des données multidiffusées d'un autre récepteur client parmi la pluralité de récepteurs clients via une liaison de pairs fiable au travers du réseau de pairs, ledit autre récepteur client étant sélectionné dans une liste d'au moins un autre récepteur client parmi la pluralité de récepteurs clients fournie par un serveur de supervision, la source de données étant apte à transmettre auxdits récepteurs clients, préalablement aux données la racine (HR) d'un arbre de hachage de Merkle desdites données par multidiffusion fiable à travers ledit réseau de télécommunication, la source de données étant apte à transmettre aux récepteurs clients les hachés de niveau inférieur à ladite racine, postérieurement à ladite racine et préalablement aux données.

4. Récepteur client selon la revendication 3, **caractérisé en ce que** ledit récepteur client (20₁, 20₂,..., 210_{N}) comprend des moyens de vérification d'intégrité des données fournies par ledit autre récepteur client lors d'une liaison de pairs fiable.

5. Récepteur client selon la revendication 4, **caractérisé en ce que** lesdits moyens de vérification comprennent des moyens de calcul de hachés (HS11,...) de fragments de données reçus d'au moins un autre récepteur client et des moyens de comparaison des hachés calculés avec des hachés desdits fragments reçus de ladite source (10) de données.

6. Récepteur client selon la revendication 5, **caractérisé en ce que** ledit récepteur comprend des moyens de vérification d'intégrité de hachés fournis par ledit autre récepteur client lors d'une liaison de pairs fiable.

7. Procédé d'émission de données multidiffusées, à travers un réseau (1) de télécommunication, entre une source et une pluralité de récepteurs clients (20₁, 20₂,..., 20_{N}) connectés au réseau de télécommunication et apte à recevoir les données multidiffusées à travers le réseau (1) de télécommunication, lesdits récepteurs clients constituant des pairs d'un réseau de pairs, ledit procédé **caractérisé en ce qu'**il comprend l'émission de données manquantes des données multidiffusées par un pair d'une liste d'au moins un pair vers un récepteur client à travers une liaison de pairs fiable au travers du réseau de pairs, la liste étant fournie par un serveur de supervision au récepteur client, la source de données étant apte à transmettre auxdits récepteurs clients, préalablement aux données la racine (HR) d'un arbre de hachage de Merkle desdites données par multidiffusion fiable à travers ledit réseau de télécommunication, la source de données étant apte à transmettre aux récepteurs clients les hachés de niveau inférieur à ladite racine, postérieurement à ladite racine et préalablement aux données.

8. Procédé de réception de données multidiffusées, à travers un réseau (1) de télécommunication, entre une source et une pluralité de récepteurs clients (20₁, 20₂,..., 20_{N}) connectés au réseau de télécommunication et apte à recevoir les données multidiffusées à travers le réseau (1) de télécommunication, lesdits récepteurs clients constituant des pairs d'un réseau de pairs, ledit procédé **caractérisé en ce qu'**il comprend la réception de données manquantes des données multidiffusées par un récepteur client d'un pair d'une liste d'au moins un pair à travers une liaison de pairs fiable d'un réseau de pairs, la liste étant fournie par un serveur de supervision audit récepteur client, la source de données étant apte à transmettre auxdits récepteurs clients, préalablement aux données la racine (HR) d'un arbre de hachage de Merkle desdites données par multidiffusion fiable à travers ledit réseau de télécommunication, la source de données étant apte à transmettre aux récepteurs clients les hachés de niveau inférieur à ladite racine, postérieurement à ladite racine et préalablement aux données.

9. Programme d'ordinateur sur un support de données et chargeable dans la mémoire interne d'un ordinateur, ledit programme comprenant des portions de code pour l'exécution des étapes du procédé selon la revendication 7.

10. Programme d'ordinateur sur un support de données et chargeable dans la mémoire interne d'un ordinateur, ledit programme comprenant des portions de code pour l'exécution des étapes du procédé selon la revendication 8.

## Patentansprüche

1. System zur Erhöhung der Zuverlässigkeit einer Multicast-Datenübertragung über ein Telekommunikationsnetz (1) zwischen:
- einer Datenquelle (10) und
- einer Vielzahl von an das Telekommunikationsnetz angeschlossenen und zum Empfangen der Multicast-Daten über das Telekommunikationsnetz (1) fähigen Client-Empfängern (20₁, 20₂, ..., 20_{N}), wobei die Client-Empfänger Peers eines Netzes von Peers darstellen, **dadurch gekennzeichnet, dass** das System umfasst
- einen an das Telekommunikationsnetz angeschlossenen und zum Liefern einer Liste von wenigstens einem Peer an jeden Client-Empfänger der Vielzahl von Client-Empfängern fähigen Überwachungsserver (30), wobei der Client-Empfänger zum Erhalten der fehlenden Daten der Multicast-Daten eines Peers der Liste über eine zuverlässige Verbindung von Peers über das Netz von Peers fähig ist;
wobei die Datenquelle zum Übertragen der Wurzel (HR) eines Merkle-Hash-Baums der Daten per zuverlässigem Multicast über das Telekommunikationsnetz vor den Daten an die Client-Empfänger fähig ist, wobei die Datenquelle zum Übertragen der Hashs auf zur Wurzel untergeordneter Ebene nach der Wurzel und vor den Daten an die Client-Empfänger fähig ist.

2. Überwachungsserver für ein System zur Erhöhung der Zuverlässigkeit einer Multicast-Datenübertragung über ein Telekommunikationsnetz (1) zwischen einer Datenquelle (10) und einer Vielzahl von an das Telekommunikationsnetz angeschlossenen und zum Empfangen der Multicast-Daten über das Telekommunikationsnetz (1) fähigen Client-Empfängern (20₁, 20₂, ..., 20_{N}), wobei die Client-Empfänger Peers eines Netzes von Peers darstellen, **dadurch gekennzeichnet, dass** der Überwachungsserver (30) an das Telekommunikationsnetz angeschlossen ist und zum Liefern einer Liste von wenigstens einem Peer an jeden Client-Empfänger der Vielzahl von Client-Empfängern fähig ist, wobei die Liste zum Herstellen einer zuverlässigen Verbindung von Peers über das Netz von Peers zwischen dem Client-Empfänger und dem Peer zum Erhalten der fehlenden Daten bestimmt ist,
wobei die Datenquelle zum Übertragen der Wurzel (HR) eines Merkle-Hash-Baums der Daten per zuverlässigem Multicast über das Telekommunikationsnetz vor den Daten an die Client-Empfänger fähig ist, wobei die Datenquelle zum Übertragen der Hashs auf zur Wurzel untergeordneter Ebene nach der Wurzel und vor den Daten an die Client-Empfänger fähig ist.

3. Client-Empfänger in einem System zur Erhöhung der Zuverlässigkeit einer Multicast-Datenübertragung über ein Telekommunikationsnetz (1) zwischen einer Quelle (10) und einer Vielzahl von an das Telekommunikationsnetz angeschlossenen und zum Empfangen der Multicast-Daten über das Telekommunikationsnetz fähigen Client-Empfängern (20₁, 20₂, ..., 20_{N}), **dadurch gekennzeichnet, dass** der Client-Empfänger (20₁, 20₂, ..., 210_{N}) zum Erhalten der fehlenden Daten der Multicast-Daten eines anderen Empfängers von der Vielzahl von Client-Empfängern über eine zuverlässige Verbindung von Peers durch das Netz von Peers fähig ist, wobei der andere Client-Empfänger in einer von einem Überwachungsserver gelieferten Liste von wenigstens einem anderen Client-Empfänger aus der Vielzahl von Client-Empfängern ausgewählt wird, wobei die Datenquelle zum Übertragen der Wurzel (HR) eines Merkle-Hash-Baums der Daten per zuverlässigem Multicast über das Telekommunikationsnetz vor den Daten an die Client-Empfänger fähig ist, wobei die Datenquelle zum Übertragen der Hashs auf zur Wurzel untergeordneter Ebene nach der Wurzel und vor den Daten an die Client-Empfänger fähig ist.

4. Client-Empfänger nach Anspruch 3, **dadurch gekennzeichnet, dass** der Client-Empfänger (20₁, 20₂, ..., 210_{N}) Mittel zum Überprüfen der Intaktheit der während einer zuverlässigen Verbindung von Peers vom anderen Client-Empfänger gelieferten Daten umfasst.

5. Client-Empfänger nach Anspruch 4, **dadurch gekennzeichnet, dass** die Mittel zum Überprüfen Mittel zum Berechnen von Hashs (HS11, ...) von von wenigstens einem anderen Client-Empfänger empfangenen Datenfragmenten und Mittel zum Vergleichen der berechneten Hashs mit den Hashs der von der Datenquelle (10) empfangenen Fragmente umfassen.

6. Client-Empfänger nach Anspruch 5, **dadurch gekennzeichnet, dass** der Client-Empfänger Mittel zum Überprüfen der Intaktheit der während einer zuverlässigen Verbindung von Peers vom anderen Client-Empfänger gelieferten Hashs umfasst.

7. Verfahren zum Senden von Multicast-Daten über ein Telekommunikationsnetz (1) zwischen einer Quelle und einer Vielzahl von an das Telekommunikationsnetz angeschlossenen und zum Empfangen der Multicast-Daten über das Telekommunikationsnetz (1) fähigen Client-Empfängern (20₁, 20₂, ..., 20_{N}), wobei die Client-Empfänger Peers eines Netzes von Peers darstellen, wobei das Verfahren **dadurch gekennzeichnet ist, dass** es das erneute Senden von fehlenden Daten der Multicast-Daten durch einen Peer einer Liste von wenigstens einem Peer zu einem Client-Empfänger über eine zuverlässige Verbindung von Peers durch das Netz von Peers umfasst, wobei die Liste von einem Überwachungsserver an den Client-Empfänger geliefert wird, wobei die Datenquelle zum Übertragen der Wurzel (HR) eines Merkle-Hash-Baums der Daten durch zuverlässiges Multicasting über das Telekommunikationsnetz vor den Daten an die Client-Empfänger fähig ist, wobei die Datenquelle zum Übertragen der Hashs auf zur Wurzel untergeordneter Ebene nach der Wurzel und vor den Daten an die Client-Empfänger fähig ist.

8. Verfahren zum Empfangen von Multicast-Daten über ein Telekommunikationsnetz (1) zwischen einer Quelle und einer Vielzahl von an das Telekommunikationsnetz angeschlossenen und zum Empfangen der Multicast-Daten über das Telekommunikationsnetz (1) fähigen Client-Empfängern (20₁, 20₂, ..., 20_{N}), wobei die Client-Empfänger Peers eines Netzes von Peers darstellen, wobei das Verfahren **dadurch gekennzeichnet ist, dass** es das erneute Empfangen von fehlenden Daten der Multicast-Daten eines Peers einer Liste von wenigstens einem Peer über eine zuverlässige Verbindung von Peers eines Netzes von Peers durch einen Client-Empfänger umfasst, wobei die Liste von einem Überwachungsserver an den Client-Empfänger geliefert wird, wobei die Datenquelle zum Übertragen der Wurzel (HR) eines Merkle-Hash-Baums der Daten durch zuverlässiges Multicasting über das Telekommunikationsnetz vor den Daten an die Client-Empfänger fähig ist, wobei die Datenquelle zum Übertragen der Hashs auf zur Wurzel untergeordneter Ebene nach der Wurzel und vor den Daten an die Client-Empfänger fähig ist.

9. In den internen Speicher eines Computers ladbares Computerprogramm auf einem Datenträger, wobei das Programm Codeteile zum Ausführen der Schritte des Verfahrens nach Anspruch 7 umfasst.

10. In den internen Speicher eines Computers ladbares Computerprogramm auf einem Datenträger, wobei das Programm Codeteile zum Ausführen der Schritte des Verfahrens nach Anspruch 8 umfasst.

## Claims

1. System for improving the reliability of transmission of multibroadcast data, via a telecommunications network (1), between:
- a source (10) of data and
- a plurality of customer receivers (20₁, 20₂, ..., 20_{N}) coupledcoupled to the telecommunications network and configured to receive the data multibroadcast via the telecommunications network (1), said customer receivers being peers of a peer-to-peer peer-to-peer network, **characterized in that** said system includes
- a supervision server (30) coupledcoupled to the telecommunications network and being configured to provide each customer receiver of the plurality of customer receivers with a list of at least one peer, said customer receiver being configured to obtain missing data of multibroadcast data from a peer of the list via a reliable peer-to-peer connection through the peer-to-peer peer-to-peer network;
the source of data being adapted to transmit to said customer receivers, before the data, a root hash hash (HR) of a Merkle hash tree of said data by reliable multibroadcasting via said telecommunications network, the source of data being adapted to transmit to the customer receivers hashes of lower level than root hash hash, after said root hash hash and before said data.

2. Supervision server for a system for improving the reliability of transmission of multibroadcast data, via a telecommunications network (1), between a source (10) of data and a plurality of customer receivers (20₁, 20₂, ..., 20_{N}) coupled to the telecommunications network and configured to receive the data multibroadcast via the telecommunications network (1), said customer receivers being peers of a peer-to-peer network, **characterized in that** said supervision server (30) is coupled to the telecommunications network and configured to provide each customer receiver of the plurality of customer receivers with a list of at least one peer, said list being intended to establish a reliable peer-to-peer connection via the peer-to-peer network between said customer receiver and said peer with a view to obtaining missing data,
the source of data being adapted to transmit to said customer receivers, before the data, the root hash (HR) of a Merkle hash tree of said data by reliable multibroadcasting via said telecommunications network, the source of data being adapted to transmit to the customer receivers the hashes of lower level than said root, after said root hash and before the data.

3. Customer receiver in a system for improving the reliability of transmission of multibroadcast data, via a telecommunications network (1), between a source (10) and a plurality of customer receivers (20₁, 20₂, ..., 20_{N}) coupled to the telecommunications network and configured to receive the data multibroadcast via the telecommunications network, **characterized in that** said customer receiver (20₁, 20₂, ..., 210_{N}) is configured to obtain missing data from the multibroadcast data of another customer receiver among the plurality of customer receivers via the reliable peer-to-peer connection, said other customer receiver being selected from a list of at least one other customer receiver among the plurality of customer receivers provided by a supervision server,the source of data being adapted to transmit to said customer receivers, before the data, the root hash (HR) of a Merkle hash tree of said data by reliable multibroadcasting via said telecommunications network, the source of data being adapted to transmit to the customer receivers the hashes of lower level than said root, after said root hash and before the data.

4. Customer receiver according to Claim 3, **characterized in that** said customer receiver (20₁, 20₂, ..., 210_{N}) comprises means for verifying the integrity of the data provided by said other customer receiver during a reliable peer-to-peer connection.

5. Customer receiver according to Claim 4, **characterized in that** said verification means comprise means for calculating hashes (HS11, ...) of fragments of data received from at least one other customer receiver and means for comparing the calculated hashes with hashes of said fragments received from said source (10) of data.

6. Customer receiver according to Claim 5, **characterized in that** said receiver includes means for verifying the integrity of hashes provided by said other customer receiver during a reliable peer-to-peer connection.

7. Method of transmitting multibroadcast data, via a telecommunications network (1), between a source and a plurality of customer receivers (20₁, 20₂, ..., 20_{N}) coupled to the telecommunications network and configured to receive the data multibroadcast via the telecommunications network (1), said customer receivers being peers of a peer-to-peer network, said method being **characterized in that** it includes transmission of missing data from the data multibroadcast by a peer from a list of at least one peer to a customer receiver via a reliable peer-to-peer connection through the peer-to-peer network, the list being provided by a supervision server to the customer receiver,
the source of data being adapted to transmit to said customer receivers, before the data, the root hash (HR) of a Merkle hash tree of said data by reliable multibroadcasting via said telecommunications network, the source of data being adapted to transmit to the customer receivers the hashes of lower level than said root, after said root hash and before the data.

8. Method of receiving multibroadcast data, via a telecommunications network (1), between a source and a plurality of customer receivers (20₁, 20₂, ..., 20_{N}) coupled to the telecommunications network and configured to receive the data multibroadcast via the telecommunications network (1), said customer receivers being peers of a peer-to-peer network, said method being **characterized in that** it includes reception of missing data from the data multibroadcast by a customer receiver from a peer from a list of at least one peer via a reliable peer-to-peer connection of a peer-to-peer network, the list being provided by a supervision server to said customer receiver,
the source of data being adapted to transmit to said customer receivers, before the data, the root hash (HR) of a Merkle hash tree of said data by reliable multibroadcasting via said telecommunications network, the source of data being adapted to transmit to the customer receivers the hashes of lower level than said root, after said root hash and before the data.

9. Computer program on a data medium that can be loaded into the internal memory of a computer, said program comprising code portions for executing steps of the method according to Claim 7.

10. Computer program on a data medium that can be loaded into the internal memory of a computer, said program comprising code portions for executing steps of the method according to Claim 8.
